Europäisches Patentamt

European Patent Office

Office européen des brevets

(19)

(11) **EP 1 152 939 B1**

(12) **EUROPÄISCHE PATENTSCHRIFT**

(45) Veröffentlichungstag und Bekanntmachung des Hinweises auf die Patenterteilung:
**06.11.2002 Patentblatt 2002/45**

(21) Anmeldenummer: **00910558.6**

(22) Anmeldetag: **22.02.2000**

(51) Int Cl.⁷: **B61L 3/20**, B60L 9/00

(86) Internationale Anmeldenummer:
**PCT/DE00/00556**

(87) Internationale Veröffentlichungsnummer:
**WO 00/050285 (31.08.2000 Gazette 2000/35)**

(54) **VERFAHREN ZUM ÜBERTRAGEN VON DATEN ÜBER EINEN ELEKTRISCHEN ANTRIEBSSTROM FÜR FAHRZEUGE FÜHRENDEN FAHRSTROMLEITER**

METHOD FOR TRANSMITTING DATA VIA A TRACTION CONTROL WHICH CARRIES AN ELECTRICAL DRIVING CURRENT FOR VEHICLES

PROCEDE DE TRANSMISSION DE DONNEES PAR L'INTERMEDIAIRE D'UN CONDUCTEUR DE COURANT DE TRACTION TRANSPORTANT UN COURANT D'ENTRAINEMENT ELECTRIQUE POUR VEHICULE

(84) Benannte Vertragsstaaten:
**AT BE CH CY DE DK ES FI FR GB GR IE IT LI LU MC NL PT SE**

(30) Priorität: **22.02.1999 DE 19909244**

(43) Veröffentlichungstag der Anmeldung:
**14.11.2001 Patentblatt 2001/46**

(73) Patentinhaber: **SIEMENS AKTIENGESELLSCHAFT
80333 München (DE)**

(72) Erfinder:
• **GRIEPENTROG, Gerd**
  **D-91058 Erlangen (DE)**
• **MAIER, Reinhard**
  **D-91074 Herzogenaurach (DE)**
• **SCHNEIDER, Egid**
  **D-91085 Weisendorf (DE)**
• **PRIEBE, Peter**
  **D-38302 Wolfenbüttel (DE)**

(56) Entgegenhaltungen:
**DE-C- 538 650          DE-C- 730 713
GB-A- 1 521 722**

EP 1 152 939 B1

## Beschreibung

Aus der deutschen Patentschrift 730 713 ist ein Verfahren zum Übertragen von Daten über einen Fahrstromleiter bekannt, mit dem gleichzeitig Antriebsstrom für Schienenfahrzeuge übertragen wird. Die Datenübertragung kann bei dem vorbekannten Verfahren sowohl zwischen den Schienenfahrzeugen untereinander als auch zwischen einer Leitstelle und den Schienenfahrzeugen erfolgen. Bei dem vorbekannten Verfahren werden die Daten als Datensignal auf einem vorgegebenen Frequenzkanal mit einer Sendeeinrichtung in den Fahrstromleiter eingespeist. Das Datensignal wird dann über den Fahrstromleiter zu einer Empfangseinrichtung übertragen und dort empfangen. Anschließend wird das Datensignal unter Gewinnung von den Daten der Sendeeinrichtung entsprechenden Empfangsdaten ausgewertet. Bei dem vorbekannten Verfahren wird das Datensignal schienenfahrzeugseitig über einen Antriebsstrom-Abnehmer in den Fahrstromleiter eingespeist bzw. mit diesem empfangen, wobei zwischen dem Fahrstromleiter und dem Antriebsstrom-Abnehmer auftretende Lichtbögen die Datenübertragung erheblich stören und unter Umständen sogar unterbrechen können, weil das Datensignal von dem Störsignal des Lichtbogens überlagert wird.

Aus der deutschen Patentschrift 538 650 ist ebenfalls ein Verfahren bekannt, bei dem Daten über einen Fahrstromleiter übertragen werden. Bei diesem Verfahren werden in einer ersten Lokomotive Steuerkommandos enthaltene Datensignale erzeugt und zwecks Datenübertragung zu einer zweiten Lokomotive in den Fahrstromleiter eingespeist. Die Dateninformation, also das jeweilige Steuerkommando, ist dabei frequenzcodiert, d. h. daß jedem Steuerkommando ein Datensignal mit einer vorgegebenen Frequenz zugeordnet ist. Die Frequenz wird bei dem Verfahren mit einem Schalthebel in der ersten Lokomotive eingestellt. Die Datensignale gelangen über den Fahrstromleiter zu einer Empfangseinrichtung in der zweiten Lokomotive, in der sie empfangen und ausgewertet werden.

Der Erfindung liegt die Aufgabe zugrunde, ein Verfahren zum Übertragen von Daten über einen gleichzeitig Antriebsstrom für ein Fahrzeug oder mehrere Fahrzeuge führenden Fahrstromleiter anzugeben, bei dem eine Unterbrechung der Datenübertragung durch einen zwischen Antriebsstrom-Abnehmer und Fahrstromleiter auftretenden Lichtbogen zuverlässig vermieden wird.

Diese Aufgabe wird erfindungsgemäß gelöst durch ein Verfahren zum Übertragen von Daten über einen Fahrstromleiter, mit dem gleichzeitig ein Antriebsstrom zu einem Fahrzeug übertragen wird, wobei bei dem Verfahren

- senderseitig mindestens zwei jeweils die Daten enthaltende Datensignale mit unterschiedlichen Frequenzkanälen in den Fahrstromleiter eingespeist werden,

- wobei ein durch die Frequenzkanäle definiertes Frequenzband größer als die zu erwartende spektrale Bandbreite eines durch einen zwischen dem Fahrstromleiter und einem Antriebsstrom-Abnehmer des Fahrzeugs auftretenden Lichtbogen erzeugten Störsignals ist,

- die Datensignale über den Fahrstromleiter zu einer Empfangseinrichtung übertragen und mit dieser empfangen werden und

- die Datensignale nach dem Empfang unter Gewinnung von den Daten der Sendeeinrichtung entsprechenden Empfangsdaten ausgewertet werden, wobei im Falle des Auftretens des Störsignals als die Empfangsdaten die empfangenen Daten des- oder derjenigen Datensignale ausgewählt werden, deren Frequenzkanäle außerhalb des durch die spektrale Bandbreite definierten Spektrums des Störsignals liegen.

Das erfindungsgemäße Verfahren kann in gleicher Weise durchgeführt werden, wenn über den Fahrstromleiter Fahrstrom für mehrere Fahrzeuge übertragen wird; es ist lediglich sicherzustellen, daß das die Frequenzkanäle der Datensignale enthaltende Frequenzband größer als die zu erwartende spektrale Bandbreite der Störsignale der auftretenden Lichtbögen ist.

Das erfindungsgemäße Verfahren zeichnet sich dadurch aus, daß mit diesem Daten besonders zuverlässig übertragen werden können, da ein Auftreten eines Lichtbogens zwischen Fahrstromleiter und Antriebsstrom-Abnehmer keine Unterbrechung der Datenübertragung nach sich zieht. Bei dem erfindungsgemäßen Verfahren werden die Daten nämlich gleichzeitig mit mindestens zwei die Daten identisch enthaltenden Datensignalen auf unterschiedlichen Frequenzkanälen, d. h. mit unterschiedlichen Trägerfrequenzen, übertragen, wobei das die Frequenzkanäle enthaltende Frequenzband größer ist als die zu erwartende spektrale Bandbreite des Störsignals des Lichtbogens, so daß stets sichergestellt ist, daß mindestens eines der über den Fahrstromleiter übertragenen Datensignale außerhalb der spektralen Bandbreite des Störsignals liegt. Wertet man in der Empfangseinrichtung nach dem Empfangen der mindestens zwei Datensignale dann ausschließlich das oder diejenigen Datensignale aus, deren Frequenzkanäle außerhalb des durch die spektrale Bandbreite (Störbandbreite) definierten Spektrums des Störsignals liegen, so ist stets sichergestellt, daß die Datenübertragung von dem Störsignal des Lichtbogens unbeeinflußt ist.

Um zu erreichen, daß mit einem außerhalb der Störbandbreite liegenden Datensignal eine vorgegebene Bitfehlerwahrscheinlichkeit erreicht wird, kann die Störbandbreite beispielsweise in Abhängigkeit von der Amplitude der Datensignale definiert werden, und zwar derart, daß außerhalb dieser Störbandbreite das Amplitudenverhältnis von Daten- zu Störsignal einen sich aus der gewünschten Bitfehlerwahrscheinlichkeit ergebenden Signal-Rauschabstand nicht unterschreitet. Angaben für solche Verhältnisse findet man z. B. in Dostert, K; Bartel, W.: "Neuartige Datenübertragung auf Stromversorgungsleitungen,,, elektro-anzeiger 42, Jg. Nr. 12 (1989).

Besonders einfach und damit vorteilhaft läßt sich prüfen, welche der Datensignale einen außerhalb des Spektrums des Störsignals liegenden Frequenzkanal aufweisen, indem mit den Datensignalen senderseitig zusätzlich zu den Daten auch Kontrollbits in den Fahrstromleiter eingespeist werden, mit denen in der Empfangseinrichtung festgestellt wird, ob die mit den jeweiligen Datensignalen übertragenen Daten fehlerfrei übertragen worden sind. Die fehlerfrei übertragenen Datensignale werden anschließend als außerhalb des Spektrums des Störsignals liegend behandelt.

Gemäß einer anderen Weiterbildung des erfindungsgemäßen Verfahrens ist vorgesehen, daß vorzugsweise eine ungerade Anzahl, jedoch mindestens drei bezüglich ihres logischen Dateninhalts identische Datensignale mit unterschiedlichen Frequenzkanälen in den Fahrstromleiter eingespeist werden, die Daten der empfangenen Datensignale empfangsseitig miteinander verglichen werden und als die Empfangsdaten die empfangenen Daten derjenigen Datensignale ausgewählt werden, die in ihrer Mehrheit identische Daten übertragen haben. Hierzu ist allerdings erforderlich, daß das die Frequenzkanäle enthaltende Frequenzband mindestens die doppelte Breite der spektralen Bandbreite des durch den Lichtbogen erzeugten Störsignals aufweist.

Eine weitere vorteilhafte Möglichkeit der Prüfung der Fehlerfreiheit eines auf einem Frequenzkanal übertragenen Datensignals besteht darin, nur solche Datensignale als fehlerfrei übertragen anzuerkennen, deren Trägerfrequenz über einen bestimmten Zeitraum ein bestimmtes Amplitudenband nicht verlassen hat. So kann beispielsweise die Forderung erhoben werden, daß nur solche Datensignale als fehlerfrei übertragen anzusehen sind, deren Amplitude während der zur Übertragung eines Datensignals notwendigen Zeit 50% der Sendeamplitude nicht unterschritten und 150% der Sendeamplitude nicht überschritten hat.

Besonders sicher und damit vorteilhaft lassen sich die Daten übertragen, wenn die Datensignale mittels OFDM oder Spread-Spectrum-Verfahren codiert in den Fahrstromleiter eingespeist werden, da solchermaßen codierte Signale besonders störunempfindlich sind.

Das erfindungsgemäße Verfahren kann in der Weise durchgeführt werden, daß die Daten von einem Fahrzeug zu einer Leitstelle und/oder zu einem oder mehreren anderen Fahrzeugen übertragen werden; die Datenübertragung kann dabei auch bidirektional erfolgen. Außerdem können die Daten mit dem erfindungsgemäßen Verfahren auch mit einer ortsfesten Sendeeinrichtung zu einer ortsfesten Empfangsstelle über einen mit Lichtbögen beaufschlagten Fahrstromleiter übertragen werden. Im übrigen können mit dem erfindungsgemäßen Verfahren in vorteilhafter Weise als Daten bzw. Datensignale auch Steuersignale zu einem oder mehreren Fahrzeugen, beispielsweise Schienenfahrzeugen, von einer Leitzentrale übertragen werden, so daß das erfindungsgemäße Verfahren als Fahrzeugsteuerungsverfahren, insbesondere bei Schienenfahrzeugen als Zugbeeinflussungs- bzw. Zugsteuerungsverfahren verwendet werden kann.

Zur Erläuterung der Erfindung zeigt

Figur 1 ein Ausführungsbeispiel einer Anordnung zur Durchführung des erfindungsgemäßen Verfahrens und
Figur 2 ein Frequenzspektrum von zur Übertragung von Daten gemäß dem Ausführungsbeispiel nach Figur 1 geeigneten Datensignalen.

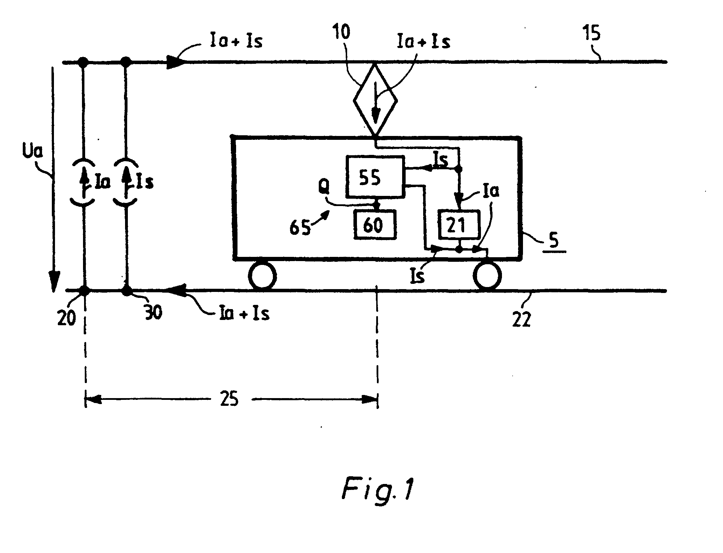

Die Figur 1 zeigt ein Schienenfahrzeug 5, das mit einem Antriebsstrom-Abnehmer 10 an einen Fahrdraht 15 als Fahrstromleiter angeschlossen ist. An dem Fahrdraht 15 liegt an einer Antriebsstrom-Einspeisestelle 20 eine Antriebspannung Ua an, durch die ein Antriebsstrom Ia durch den Fahrdraht 15, den Antriebsstrom-Abnehmer 10 sowie einen Antriebsmotor 21 des Schienenfahrzeugs 5 fließt. Der Rückfluß des Antriebsstroms Ia wird durch Schienen 22 gewährleistet, auf denen das Schienenfahrzeug 5 fährt. Die Antriebsstrom-Einspeisestelle 20 und der Antriebsstrom-Abnehmer 10 bzw. dessen Lage legen einen Streckenabschnitt 25 fest.

An einer Datensignal-Einspeisestelle 30 werden mit einer Sendeeinrichtung, die beispielsweise in einer Leitstelle bzw. Leitzentrale angeordnet sein kann, Datensignale D1 bis D11 in Form eines Datensignalstromes Is in den Fahrdraht 15 eingespeist. Die Datensignale D1 bis D11 enthalten jeweils identische Daten Q und gelangen über den Antriebsstrom-Abnehmer 10 zu dem Schienenfahrzeug 5. Der Rückfluß der Datensignale D1 bis D11 bzw. des Datensignalstroms Is wird durch die Schienen 22 gewährleistet. Die Datensignale D1 bis D11 bzw. der Datensignalstrom Is gelangen über den Antriebsstrom-Abnehmer 10 dabei konkret zu einer Auswahleinrichtung 55 und anschließend von dieser zu den Schienen 22; es wird nämlich davon ausgegangen, daß der Antriebsmotor 21, sei es von sich aus oder durch entsprechend ausgeführte, dem Antriebsmotor 21 zugeordnete Betriebsstromfilterkreise, für den Datensignalstrom Is so hochohmig ist, daß ein Abfließen des Datensignalstromes Is durch den Antriebsmotor 21 vernachlässigbar klein ist. Der Auswahleinrichtung 55 ist ausgangsseitig eine Auswerteinrichtung 60 nachgeordnet, die zusammen mit der Auswahleinrichtung 55 eine Empfangseinrichtung 65 für das Schienenfahrzeug 5 zum Empfangen des Datensignalstromes Is bzw. der Datensignale D1 bis D11 bildet.

Nachfolgend soll die Arbeitsweise der Auswahleinrichtung 55 anhand eines Beispieles erläutert werden; dabei wird davon ausgegangen, daß die empfangenen Daten der Datensignale D1, D4 und D6 bis D11 identisch sind, wohingegen sich die empfangenen Daten der Datensignale D2, D3 und D5 von den empfangenen Daten der Datensignale D1, D4 und D6 bis D11 unterscheiden; es wird nämlich unterstellt, daß die empfangenen Daten der Datensignale D2, D3 und D5 durch einen Lichtbogen zwischen dem Antriebsstrom-Abnehmer 10 und dem Fahrdraht 15 bzw. durch ein von diesem Lichtbogen erzeugtes Störsignal S(f) gestört sind und aus diesem Grunde nicht als Empfangsdaten ausgewertet werden dürfen.

In der Auswahleinrichtung 55 werden die empfangenen Daten der Datensignale D1 bis D11 miteinander verglichen und es werden als die Empfangsdaten der Empfangseinrichtung 65 die empfangenen Daten Q der Datensignale D1, D4 und D6 bis D11 ausgewählt und zu der Auswerteeinrichtung 60 übermittelt. Da die Datensignale D1, D4 und D6 bis D11 nämlich identische Daten enthalten, müssen sie ungestört übertragen worden sein und folglich mit ihrem Frequenzkanal jeweils außerhalb des Störspektrums des Störsignals liegen.

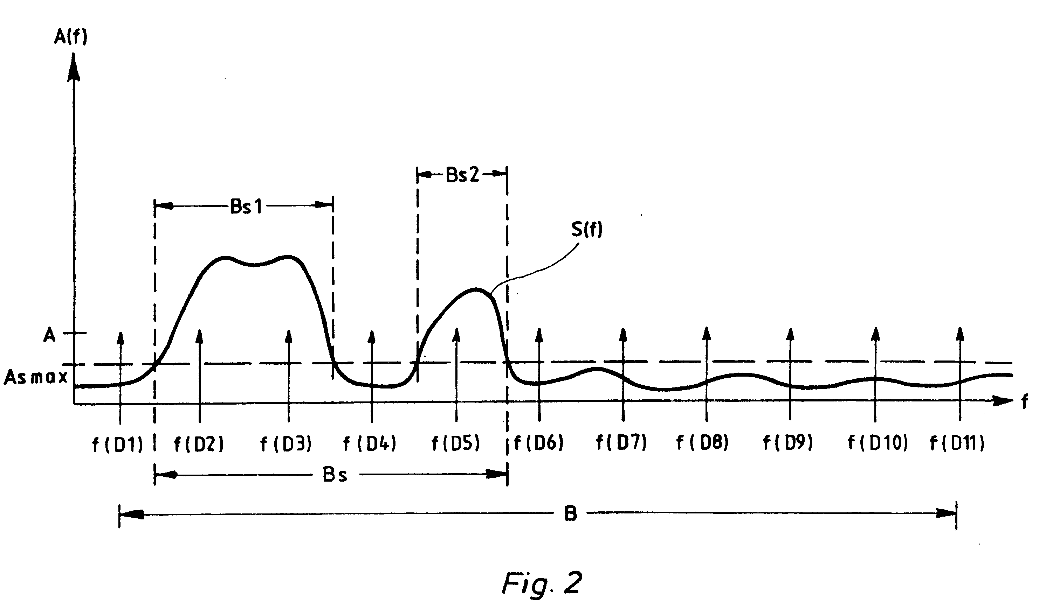

Dieser Sachverhalt soll im Zusammenhang mit der Figur 2 noch einmal genauer erläutert werden. Figur 2 zeigt im Frequenzbereich das Amplitudenspektrum A (f) der Datensignale D1 bis D11 und des Störsignals S (f), das durch den Lichtbogen zwischen dem Antriebsstrom-Abnehmer 10 des Schienenfahrzeugs 5 und dem Fahrdraht 15 hervorgerufen wird. Außerdem sind in der Figur 2 Trägerfrequenzen f(D1) bis f(D11) der Datensignale D1 bis D11 angedeutet. Im folgenden wird beispielhaft davon ausgegangen, daß zur Datenübertragung ein amplitudenbezogener Signal-Rauschabstand von 6 dB erreicht werden soll; in Figur 2 ist diese 6dB-Grenze durch einen Amplitudengrenzwert Asmax gekennzeichnet, der bei einer Amplitude A der Datensignale D1 bis D11 die maximal zulässige Störamplitude des Störsignals S(f) für den 6dB-Signal-Rauschabstand angibt. Bei einem Signal-Rauschabstand von 6dB wird eine Bitfehlerwahrscheinlichkeit kleiner als $10^{-6}$ erreicht. Man erkennt in der Figur 2, daß das Störspektrum des Störsignals S(f) zwei Frequenzabschnitte Bs1 und Bs2 enthält, in denen der geforderte Signal-Rauschabstand seitens der dort frequenzmäßig liegenden Datensignale nicht erreicht wird. Konkret erkennt man nämlich in der Figur 2, daß die Amplituden der Datensignale D2, D3 und D5 mit ihren Frequenzkanälen, d. h. also mit ihren Trägerfrequenzen f(D2), f(D3) und f(D5), den vorgegeben Signal-Rauschabstand von 6 dB nicht erreichen und somit gestört sind. Die Amplituden der anderen Datensignale D1, D4 und D6 bis D11 hingegen befinden sich mit ihren Frequenzkanälen bzw. mit ihren Trägerfrequenzen f(D1), f(D4) und f(D6) bis f(D11) außerhalb der beiden Frequenzabschnitte Bs1 und Bs2 und damit oberhalb des geforderten Signal-Rauschabstandes, so daß diese Datensignale D1, D4 und D6 bis D11 nicht von dem Störsignal S(f) beeinträchtigt werden.

Das im Zusammenhang mit den Figuren 1 und 2 beschriebene Ausführungsbeispiel zum Übertragen der Daten Q macht sich die Erkenntnis zunutze, daß auch bei einem Auftreten von Lichtbögen stets eine zuverlässige Datenübertragung über einen Fahrstromleiter, wie z. B. einen Fahrdraht, eine Fahrstromschiene oder dergleichen, erreicht werden kann, wenn das die Frequenzkanäle der Datensignale enthaltende Frequenzband B mindestens doppelt so breit wie die spektrale Bandbreite Bs des durch den Lichtbogen erzeugten Störsignales S(f) ist, weil dann die Mehrheit der Datensignale außerhalb des Störspektrums des Lichtbogenkurzschlusses liegt. Bezogen auf das Ausführungsbeispiel muß für das Frequenzband B und damit für die Trägerfrequenzen f(D1) bis f(D11) der Datensignale D1 bis D11 also gelten:

$$B = f(D11)\text{-}f(D1) > 2*Bs$$

Bs bezeichnet dabei die spektrale Bandbreite des Störsignals S(f); Bs kann bei dem Ausführungsbeispiel gemäß Figur 2 auf verschiedene Art bestimmt werden: Zum einen kann Bs durch Summenbildung der spektralen Bandbreiten der beiden Frequenzabschnitte Bs1 und Bs2 bestimmt werden, so daß man für Bs erhält:

$$Bs = Bs1 + Bs2.$$

Eine andere Möglichkeit, die spektrale Bandbreite Bs zu bestimmen, besteht darin, Bs durch Bildung der Frequenzdifferenz aus der maximalen Frequenz des Frequenzabschnittes Bs2 und der minimalen Frequenz des Frequenzabschnittes Bs1 zu gewinnen, wie dies in Figur 2 durch die Angabe des Bezugszeichens Bs angedeutet ist. Selbstverständlich ist der Wert für Bs bei dieser letztgenannten Bestimmungsmethode etwas größer als bei der zuerst beschriebenen Methode, da der Frequenzbereich zwischen den beiden Frequenzabschnitten Bs1 und Bs2 unberücksichtigt bleibt, jedoch hat dies keinen Einfluß auf die Durchführbarkeit des beschriebenen Verfahrens zum Übertragen der Daten Q, weil beide Arten der Bestimmung von Bs eine zuverlässige Datenübertragung gewährleisten. In der Praxis dürfte die zweite Methode zum Bestimmen des Zahlenwertes für Bs schneller und einfacher sein, da das Frequenzspektrum nicht im Detail bekannt sein muß.

Wegen der im allgemeinen sehr breitbandigen Störsignale von Lichtbögen hat es sich in der Praxis als sinnvoll erwiesen, daß das die Frequenzen der einzelnen Kanäle enthaltende Frequenzband auf einen Frequenzbereich von ca. 10 kHz bis ca. 20 MHz gelegt wird, weil die Bandbreite Bs von Lichtbögen i. a. eine maximale Größe von ca. Bs = 5MHz hat. Der Abstand der einzelnen Kanäle untereinander ergibt sich damit aus dem Frequenzband, dividiert durch die Anzahl der genutzten Frequenzkanäle. Eine Anzahl von ca. 128 bis 1024 Datensignalen bzw. Kanälen reicht in der Praxis i. a. aus. Bei der Wahl des Frequenzbandes als auch des Frequenzkanalabstandes kann die Beschaffenheit des Antriebsstrom-Abnehmers 10 sowie Umgebungseinflüsse - wie z. B. Regen - mitberücksichtigt werden, da diese das Spektrum von Lichtbögen mitbeeinflussen können.

Als Datensignale D1 bis D11 können beispielsweise binär kodierte Signale, vorzugsweise mittels FSK (Frequency Shift Keying), OFDM (Orthogonal Frequency Division Multiplexing) oder Spread Spectrum codierte Signale übertragen werden. Im übrigen können in vorteilhafter Weise als Daten bzw. Datensignale auch Steuersignale in den Fahrdraht 15 eingespeist werden; werden nämlich Steuersignale mit der Sendeeinrichtung, die - wie bereits erläutert - beispielsweise in einer Leitstelle bzw. Leitzentrale angeordnet sein kann, zu dem Schienenfahrzeug 5 übertragen, so kann das beschriebene Verfahren als Zugbeeinflussungsverfahren zum Übertragen von Steuerinformationen zu dem Schienenfahrzeug 5 genutzt werden.

Das Verfahren kann vorteilhafterweise außer bei Schienenfahrzeugen auch bei Oberleitungsbussen (O-Bussen), Kabinenbahnen oder Hänge-Bahnen eingesetzt werden.

Das Ausführungsbeispiel gemäß Figur 1 zeigt, daß der Datensignalstrom Is über den Antriebsstrom-Abnehmer 10 in das Schienenfahrzeug 5 eingekoppelt wird; es ist statt dessen auch möglich, den Datensignalstrom Is induktiv in das Schienenfahrzeug 5 einzuspeisen, wie dies beispielsweise in der deutschen Offenlegungsschrift 1 405 691 beschrieben ist. Das gleiche gilt entsprechend für die Einkopplung des Datensignalstromes Is in den Fahrstromleiter 15 an der Steuersignal-Einspeisestelle 30; denn auch die Einkopplung kann prinzipiell induktiv erfolgen.

**Patentansprüche**

1. Verfahren zum Übertragen von Daten (Q) über einen Fahrstromleiter (15), mit dem gleichzeitig ein Antriebsstrom (Ia) zu einem Fahrzeug (5) übertragen wird, wobei bei dem Verfahren

   - senderseitig mindestens zwei jeweils die Daten (Q) enthaltende Datensignale (D1 bis D11) mit unterschiedlichen Frequenzkanälen (f(D1) bis f(D11)) in den Fahrstromleiter (15) eingespeist werden,

     - wobei ein durch die Frequenzkanäle definiertes Frequenzband (B) größer als die zu erwartende spektrale Bandbreite (Bs) eines durch einen zwischen dem Fahrstromleiter (15) und einem Antriebsstrom-Abnehmer (10) des Fahrzeugs (5) auftretenden Lichtbogen erzeugten Störsignals (S (f)) ist,

   - die Datensignale (D1 bis D11) über den Fahrstromleiter (15) zu einer Empfangseinrichtung (65) übertragen und mit dieser empfangen werden und
   - die Datensignale (D1 bis D11) nach dem Empfang (65) unter Gewinnung von den Daten (Q) der Sendeeinrichtung entsprechenden Empfangsdaten ausgewertet werden, wobei im Falle des Auftretens des Störsignals (S(f)) als die Empfangsdaten die empfangenen Daten desoder derjenigen Datensignale (D1, D4, D6 bis D11) ausgewählt werden, deren Frequenzkanäle außerhalb des durch die spektrale Bandbreite (Bs) definierten Spektrums des Störsignals (S(f)) liegen.

2. Verfahren nach Anspruch 1,
   **dadurch gekennzeichnet, daß**

   - den Daten senderseitig Kontrollbits beigefügt werden, mit denen in der Empfangseinrichtung festgestellt wird, ob die mit den jeweiligen Datensignalen übertragenen Daten fehlerfrei übertragen worden sind, und
   - die fehlerfrei übertragenen Datensignale als außerhalb des Spektrums des Störsignals liegend behandelt werden.

3. Verfahren nach Anspruch 1,
   **dadurch gekennzeichnet, daß**

   - mindestens eine Anzahl n, jedoch mindestens drei, Datensignale (D1 bis D11) mit unterschiedlichen Frequenzkanälen (f(D1) bis f (D11)) in den Fahrstromleiter (15) eingespeist werden, wobei das die Frequenzkanäle (f (D1) bis f(D11)) enthaltende Frequenzband (B) mindestens doppelt so groß ist wie die spektrale Bandbreite (Bs) des Störsignals,
   - die Daten der empfangenen Datensignale (D1 bis D11) empfangsseitig miteinander verglichen werden und
   - die Frequenzkanä1e derjenigen Datensignale als außerhalb des Spektrums des Störsignals liegend behandelt werden, mit denen in der Mehrheit jeweils untereinander identische Daten (Q) übertragen wurden.

4. Verfahren nach Anspruch 1,
   **dadurch gekennzeichnet, daß**

   - die Frequenzkanäle derjenigen Datensignale als außerhalb des Spektrums des Störsignals liegend behandelt werden, deren Amplitude während der zur Übertragung eines Datensignals notwendigen Zeit ein bestimmtes Amplitudenband nicht verlassen hat.

5. Verfahren nach einem der vorangehenden Ansprüche,
**dadurch gekennzeichnet, daß**

- als die Datensignale (D1 bis D11) OFDM-Signale oder spread spectrum-Signale in den Fahrstromleiter (15) eingespeist werden.

6. Verfahren nach einem der vorangehenden Ansprüche,
**dadurch gekennzeichnet, daß**

- die Daten (Q) mit einer Sendeeinrichtung des Fahrzeugs (5) zu einer ortsfesten Empfangseinrichtung übermittelt werden.

7. Verfahren nach einem der Ansprüche 1 bis 5,
**dadurch gekennzeichnet, daß**

- die Daten (Q) mit einer ortsfesten Sendeeinrichtung zu dem Fahrzeug (5) übermittelt werden.

8. Verfahren nach einem der Ansprüche 1 bis 5,
**dadurch gekennzeichnet, daß**

- die Daten (Q) mit einer ortsfesten Sendeeinrichtung zu einer ortsfesten Empfangseinrichtung übermittelt werden.

9. Verfahren nach einem der Ansprüche 1 bis 5,
**dadurch gekennzeichnet, daß**

- die Daten (Q) von dem Fahrzeug (5) zu einem anderen Fahrzeug oder umgekehrt übermittelt werden.

## Claims

1. Method for transmitting data (Q) via a traction current conductor (15), which is simultaneously used to transmit a drive current (Ia) to a vehicle (5), in which method

- at the transmitter end at least two data signals (D1 to D11) which each contain the data (Q) are fed into the traction current conductor (15) with different frequency channels (f(D1) to f(D11)),
- a frequency band (B) which is defined by the frequency channels being greater than the expected spectral bandwidth (Bs) of an interference signal (S(f)) generated by an arc occurring between the traction current conductor (15) and a drive current collector (10) of the vehicle (5),

- the data signals (D1 to D11) being transmitted via the traction current conductor (15) to a receiver device (65) and being received using said device and
- the data signals (D1 to D11) are evaluated after the reception (65) during the acquisition of the reception data corresponding to the data (Q) of the transmitter device, in which case, in the event of the interference signal (S(f)) occurring, the received data of that data signal or those, data signals (D1, D4, D6 to D11) whose frequency channels lie outside the spectrum of the interference signal (S(f)) defined by the spectral bandwidth (Bs) is selected as the reception data.

2. Method according to Claim 1, **characterized in that**

- check bits are added to the data at the transmitter end, with which check bits it is determined in the receiver device whether the data transmitted with the respective data signals has been transmitted free of errors, and
- the data signals which have been transmitted free of errors are treated as lying outside the spectrum of the interference signal.

3. Method according to Claim 1, **characterized in that**

- at least a number n, but at least three, data signals (D1 to D11) are fed into the traction current conductor (15) with different frequency channels (f(D1) to f(D11)), the frequency band (B) containing the frequency channels (f(D1) to f (D11)) being at least twice as large as the spectral bandwidth (Bs) of the interference signal,
- the data items of the received data signals (D1 to D11) are compared with one another at the receive end, and
- the frequency channels of those data signals by means of the majority of which respectively mutually identical data items are transmitted are treated as lying outside the spectrum of the interference signal.

4. Method according to Claim 1, **characterized in that**

- the frequency channels of those data signals whose amplitude has not left a specific amplitude band during the time necessary for the transmission of a data signal are treated as lying outside the spectrum of the interference signal.

5. Method according to one of the preceding claims,

**characterized in that**

- OFDM signals or spread spectrum signals are fed into the traction current conductor (15) as the data signals (D1 to D11).

6. Method according to one of the preceding claims, **characterized in that**

- the data (Q) is transferred to a fixed receiver device using a transmitter device of the vehicle (5).

7. Method according to one of Claims 1 to 5, **characterized in that**

- the data (Q) is transferred to the vehicle (5) using a fixed transmitter device.

8. Method according to one of Claims 1 to 5, **characterized in that**

- the data (Q) is transferred to a fixed receiver device using a fixed transmitter device.

9. Method according to one of Claims 1 to 5, **characterized in that**

- the data (Q) is transferred from the vehicle (5) to another vehicle, or vice versa.

**Revendications**

1. Procédé de transmission de données (Q) par un conducteur (15) de courant de traction, par lequel un courant (Ia) d'entraînement est transmis en même temps à un véhicule (5), procédé dans lequel

- on injecte dans le conducteur (15) de courant de traction, du côté émetteur, au moins deux signaux (D1 à D11) de données contenant respectivement les données (Q) par des canaux (f(D1) à f(D11)) différents de fréquence,

  - une bande (B) de fréquence définie par les canaux de fréquence étant plus grande que la largeur (Bs) de bande spectrale à laquelle on s'attend d'un signal (S(f)) parasite produit par un arc électrique apparaissant entre le conducteur (15) de courant de traction et un dispositif (10) de prélèvement du courant d'entraînement du véhicule (5),

- les signaux (D1 à D11) de données étant transmis par le conducteur (15) de courant d'entraînement à un dispositif (65) de réception et étant reçus par celui-ci, et

- les signaux (D1 à D11) de données étant exploités après la réception (65) en obtenant des données de réception correspondant aux données (Q) du dispositif d'émission et s'il survient le signal (S(f)) parasite, les données reçues du ou des signaux (D1, D4, D6 à D11) de données, dont les canaux de fréquence sont en dehors du spectre, défini par la largeur (Bs) de bande spectrale du signal (S(f)) parasite sont sélectionnées comme données de réception.

2. Procédé suivant la revendication 1, **caractérisé en ce que**

- il est ajouté aux données du côté de l'émission des bits de contrôle par lesquels il est constaté dans le dispositif de réception si les données transmises avec les signaux respectifs de données ont été transmises sans erreur, et
- les signaux de données transmis sans erreur sont traités comme étant en dehors du spectre du signal parasite.

3. Procédé suivant la revendication 1, **caractérisé en ce que**

- au moins un nombre n, toutefois d'au moins trois, de signaux (D1 à D11) de données, ayant des canaux (f(D1) à f(D11)) de fréquence différents, sont injectés dans le conducteur (15) de courant de traction, la bande (B) de fréquence contenant les canaux (f(D1) à f(D11)) de fréquence étant au moins deux fois plus grande que la largeur de bande (Bs) de bande spectrale du signal parasite,
- les données des signaux (D1 à D11) reçus sont comparées entre elles du côté de la réception et
- les canaux de fréquence des signaux de données, par lesquels en majorité des données (Q) respectivement identiques entre elles ont été transmises, sont traités comme étant en dehors du spectre du signal parasite.

4. Procédé suivant la revendication 1, **caractérisé en ce que**

- les canaux de fréquence des signaux de données, dont l'amplitude n'a pas, pendant le temps nécessaire à la transmission d'un signal de données, quitté une bande d'amplitude déterminée, sont traités comme étant à l'extérieur du spectre du signal parasite.

5. Procédé suivant l'une des revendications précédentes, **caractérisé en ce que**

- il est injecté comme signaux (D1 à D11) de données des signaux OFDM ou des signaux de spread-spectrum dans le conducteur (15) de courant de traction.

6. Procédé suivant l'une des revendications précédentes,
   **caractérisé en ce que**

   - les données (Q) sont transmises par un dispositif d'émission du véhicule (5) à un dispositif de réception à poste fixe.

7. Procédé suivant l'une des revendications 1 à 5,
   **caractérisé en ce que**

   - les données (Q) sont transmises par un dispositif d'émission à poste fixe au véhicule (5).

8. Procédé suivant l'une des revendications 1 à 5,
   **caractérisé en ce que**

   - les données (Q) sont transmises par un dispositif d'émission à poste fixe à un dispositif de réception à poste fixe.

9. Procédé suivant l'une des revendications 1 à 5,
   **caractérisé en ce que**

   - les données (Q) sont transmises du véhicule (5) à un autre véhicule ou inversement.

Fig.1

Fig. 2

EP 1 152 939 B1